(19) Europäisches Patentamt / European Patent Office / Office européen des brevets

(11) **EP 2 859 507 B1**

(12) **FASCICULE DE BREVET EUROPEEN**

(45) Date de publication et mention de la délivrance du brevet:
**21.10.2020 Bulletin 2020/43**

(51) Int Cl.:
**G06K 19/07** *(2006.01)*     **G06F 3/046** *(2006.01)*
**H04B 5/00** *(2006.01)*

(21) Numéro de dépôt: **13728497.2**

(22) Date de dépôt: **27.05.2013**

(86) Numéro de dépôt international:
**PCT/FR2013/051163**

(87) Numéro de publication internationale:
**WO 2013/182778 (12.12.2013 Gazette 2013/50)**

(54) **DISPOSITIF D'AIDE À LA LOCALISATION EN TEMPS RÉEL D'UN ÉLÉMENT MOBILE AUTOALIMENTÉ**

VORRICHTUNG ZUR ECHTZEIT-UNTERSTÜTZUNG DES STANDORTS EINES SELBSTGESPEISTEN MOBILEN ELEMENTS

DEVICE FOR AIDING THE LOCATION IN REAL TIME OF A SELF-POWERED MOBILE ELEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.06.2012 FR 1255334**

(43) Date de publication de la demande:
**15.04.2015 Bulletin 2015/16**

(73) Titulaire: **Starbreeze Paris**
**75008 Paris (FR)**

(72) Inventeurs:
• **LEFÈVRE, Valentin**
  **F-92800 Puteaux (FR)**
• **DUTEIL, Christophe**
  **F-75006 Paris (FR)**
• **CHABIN, Laurent**
  **F-92600 Asnieres Sur Seine (FR)**

(74) Mandataire: **Santarelli**
**49, avenue des Champs-Elysées**
**75008 Paris (FR)**

(56) Documents cités:
**WO-A1-2012/028827     US-A1- 2008 136 603**
**US-A1- 2008 238 885**

EP 2 859 507 B1

**Description**

La présente invention concerne les interfaces entre un utilisateur et un système informatique, notamment dans le domaine des jeux, et plus particulièrement un dispositif d'aide à la localisation en temps réel d'un élément mobile autoalimenté.

Dans de nombreuses situations, il peut être nécessaire, pour un système informatique, de détecter la position et/ou l'orientation d'éléments mobiles pour permettre à ce dernier de réagir en conséquence. Ainsi, par exemple, dans un jeu d'échec permettant à un utilisateur de jouer contre un joueur virtuel simulé par le système informatique, l'application mise en œuvre sur le système informatique doit connaître la position de toutes les pièces de l'échiquier, notamment celles déplacées par l'utilisateur, pour calculer son coup.

Il existe des solutions pour détecter la position et/ou l'orientation d'objets réels sur un plateau de jeu permettant d'utiliser ces objets comme interface d'un système informatique.

Ainsi, par exemple, des écrans tactiles de type résistif peuvent être utilisés comme plateau de jeu afin de détecter la position d'un objet tel qu'un stylet lorsqu'une pression suffisante est appliquée. Cependant, ce type d'écran ne supporte en général qu'un seul contact et nécessite une pression constante de l'utilisateur pour connaître la position. En d'autres termes, il n'est pas possible de détecter la position du stylet si la pression exercée par ce dernier est relâchée.

Il est également possible d'utiliser des écrans tactiles de type capacitif, basés sur le principe d'une fuite de courant via un corps conducteur. Cependant, seuls des objets conducteurs et reliés à une masse permettent la détection de leur position. Ainsi, par exemple, les positions d'objets en plastique ou en bois ne peuvent être déterminées à l'aide de tels écrans.

Par ailleurs, de façon générale, les solutions à base d'écran tactile, ou de film tactile, ne supportent qu'un nombre limité de contacts simultanés ou quasi-simultanés et ne permettent pas la détermination d'un nombre important d'objets.

D'autres solutions mettent en œuvre des technologies à base d'infrarouge, notamment sous forme de tables. Ainsi, par exemple, les produits connus sous les noms de *Surface* (*Surface* est une marque de Microsoft), de *mTouch* (*mTouch* est une marque de Merel Technologies) et d'*Entertaible* (*Entertaible* est une marque de Philips) utilisent des caméras infrarouges disposées dans l'épaisseur de la table. Cependant, l'épaisseur imposée de ces tables les rend encombrantes, peu mobiles et leur confère une certaine rigidité. En outre, leur prix ne permet pas réellement un usage familial.

Enfin une autre solution développée par le Demandeur permet un interfaçage en temps réel d'une pluralité d'éléments mobiles avec un système informatique. Après avoir sélectionné au moins un module de localisation intégré à un élément mobile, ce module de localisation est activé de façon séquentielle. Un signal est alors reçu de ce module de localisation activé et une information de position de l'élément mobile comprenant ce module de localisation activé est calculée en temps réel à partir du signal reçu. Les modules de localisation sont activés de façon séquentielle, un seul module de localisation étant activé à un instant donné.

Alors que cette dernière solution donne satisfaction, il existe un besoin constant d'amélioration des performances et de réduction des coûts de fabrication. WO2012028827 concerne les interfaces entre un utilisateur et un système informatique.

L'invention permet de résoudre au moins un des problèmes exposés précédemment. L'invention est définie dans les revendications jointes.

L'invention a ainsi pour objet un dispositif pour l'aide à la localisation en temps réel, par rayonnement électromagnétique, d'un élément mobile autoalimenté, ce dispositif comprenant les moyens suivants,

-   moyens de réception d'un signal radioélectrique comprenant au moins une information de synchronisation, lesdits moyens étant configurés pour recevoir de l'énergie d'un signal radioélectrique reçu ;
-   moyens d'émission d'un signal électromagnétique, ledit signal électromagnétique étant émis en réponse à un signal d'activation ;
-   moyens de contrôle connectés auxdits moyens de réception et auxdits moyens d'émission d'un signal électromagnétique, lesdits moyens de contrôle étant électriquement alimentés par lesdits moyens de réception d'un signal radioélectrique et étant configurés pour générer un signal d'activation en réponse à une information de synchronisation.

Le dispositif selon l'invention permet ainsi de combiner des avantages liés à l'utilisation de technologies courantes pouvant notamment être mise en œuvre à des coûts modérés avec ceux d'une architecture permettant l'utilisation des éléments mobiles dans des applications dites temps réel, dans lesquelles plusieurs centaines d'éléments mobiles peuvent être utilisés.

Lesdits moyens de réception d'un signal radioélectrique comprennent, de préférence, une mémoire double-port, ladite mémoire double-port étant configurée pour être accessible en lecture et/ou en écriture par un signal radioélectrique et par lesdits moyens de contrôle. Le dispositif selon l'invention permet ainsi d'utiliser une caractéristique de nombreux circuits standard pour contrôler l'activation d'un élément mobile afin de permettre sa localisation et/ou contrôler d'autres fonctions annexes, notamment des actuateurs, des moteurs et/ou des afficheurs.

Selon un mode de réalisation particulier, lesdits moyens de réception d'un signal radioélectrique comprennent des moyens d'identification d'une information de synchronisation à partir d'un signal radioélectrique reçu et des moyens de transmission d'une information de synchronisation identifiée auxdits moyens de contrôle. Le dispositif selon l'invention permet ainsi d'utiliser une caractéristique de nombreux circuits standard pour contrôler l'activation d'un élément mobile afin de permettre sa localisation.

Toujours selon un mode de réalisation particulier, lesdits moyens de contrôle comprennent des moyens de détection d'un changement d'état d'une source d'énergie électrique desdits moyens de réception d'un signal radioélectrique, une information de synchronisation étant identifiée en réponse à un changement d'état d'une source d'énergie électrique desdits moyens de réception d'un signal radioélectrique. Le dispositif selon l'invention est ainsi particulièrement simple à mettre en œuvre.

Toujours selon un mode de réalisation particulier, lesdits moyens de contrôle comprennent des moyens de détection d'un changement d'état d'une porteuse d'un signal radioélectrique reçu, une information de synchronisation étant identifiée en réponse à un changement d'état d'une porteuse d'un signal radioélectrique reçu. Le dispositif selon l'invention est ainsi particulièrement simple à mettre en œuvre.

Toujours selon un mode de réalisation particulier, lesdits moyens de contrôle comprennent des moyens d'accès à une valeur mémorisée dans ladite mémoire double-port, une information de synchronisation étant identifiée en fonction d'une valeur mémorisée dans ladite mémoire double-port. Le dispositif selon l'invention est ainsi facile à paramétrer et limite des temps de latence pouvant être induits.

Lesdits moyens d'émission d'un signal électromagnétique comprennent, de préférence, un solénoïde et un commutateur contrôlant l'activation dudit solénoïde.

Selon un mode de réalisation particulier, le dispositif comprend en outre des moyens de détermination d'un instant de génération un signal d'activation, ledit instant étant déterminé selon l'instant de réception d'une information de synchronisation et une information de retard. Le dispositif permet ainsi à de nombreux éléments mobiles d'être utilisé séquentiellement tout en limitant le temps de latence pouvant survenir entre l'activation successive de deux éléments mobiles.

Lesdits moyens de réception d'un signal radioélectrique sont, par exemple, conformes à un standard de type RFID ou à des recommandations telles que les recommandations QI.

Selon un mode de réalisation particulier, lesdits moyens de contrôle comprennent en outre des moyens de contrôle d'au moins un actuateur dudit élément mobile.

Toujours selon un mode de réalisation particulier, le dispositif comprend en outre des seconds moyens d'émission d'un signal électromagnétique, lesdits moyens d'émission d'un signal électromagnétique étant appelés premiers moyens d'émission d'un signal électromagnétique, lesdits premiers et seconds moyens d'émission d'un signal électromagnétique étant configurés pour émettre un signal électromagnétique les uns après les autres pour permettre la détermination de l'orientation dudit élément mobile.

D'autres avantages, buts et caractéristiques de la présente invention ressortent de la description détaillée qui suit, faite à titre d'exemple non limitatif, au regard des dessins annexés dans lesquels :

- la figure 1 illustre schématiquement un exemple d'architecture pouvant être utilisée pour mettre en œuvre l'invention ;
- la figure 2 illustre un exemple de surface de détection et de logique associée pour déterminer la position et l'orientation d'un élément mobile ;
- la figure 3 illustre schématiquement le principe physique de couplage inductif entre un solénoïde et une boucle conductrice d'une surface de détection ;
- la figure 4 illustre schématiquement un mécanisme d'interpolation permettant de calculer la position d'un solénoïde placé sur une surface de détection, selon un axe donné, à partir des mesures obtenues par un système tel que celui décrit en référence à la figure 2 ;
- les figures 5 à 8 illustrent des modes de réalisation de circuits électroniques d'élément mobile, permettant leur localisation ;
- la figure 9 illustre un exemple de circuit oscillant pour élément mobile, contrôlé par un microcontrôleur ;
- la figure 10 représente une simulation montrant le contrôle actif des phases de démarrage et d'arrêt d'oscillation d'une inductance ;
- la figure 11 illustre un exemple de module de localisation permettant de recevoir de l'énergie de lignes et colonnes d'une surface de localisation, utilisées pour recevoir des signaux de localisation provenant de modules de localisation ; et
- la figure 12 représente un exemple de chronogramme de synchronisation lorsque deux signaux de synchronisation sont utilisés.

De façon générale, l'invention a pour objet un élément mobile dont la position (abscisse, ordonnée et/ou altitude) et/ou l'orientation (cap, tangage et/ou roulis) peuvent être déterminées par une surface capable de déterminer séquentiellement la position et/ou l'orientation d'un ensemble d'éléments mobiles. A ces fins, chaque élément mobile est ici pourvu d'au moins un module de localisation et un module d'activation. La position peut être une position bidimensionnelle, dans un plan, ou une position tridimensionnelle comprenant une altitude (ou élévation). La surface de détection peut être combinée à un écran pour fournir, par exemple, des éléments de décor ou des informations.

A titre d'illustration, la captation des positions tridimensionnelles d'éléments mobiles peut s'effectuer par champ électromagnétique. A ces fins, une surface de détection de positions des éléments mobiles, composée d'un maillage de type ligne/colonne de captation électromagnétique, est utilisée. Elle est associée à un module électronique capable de calculer, par démultiplexage, la position d'un module de localisation émettant un champ électromagnétique.

Chaque module de localisation est donc sélectionné de façon séquentielle, par exemple selon un identifiant qui lui est propre, afin qu'il émette un champ électromagnétique. A ces fins, chaque module de localisation comprend un mécanisme d'activation de telle sorte que, lorsqu'il est activé, il émette un champ électromagnétique pouvant être capté par la surface de détection.

Un module de pilotage de détection de position est associé à la surface de détection afin d'activer séquentiellement les émissions électromagnétiques des modules de localisation via un signal de commande ou contrôler une telle activation séquentielle. Le signal de commande entre ce module et les modules de localisation est avantageusement transmis via des connexions sans fil.

Le signal de commande peut viser chaque module de localisation de façon sélective, par exemple selon leurs identifiants, ou un ensemble de modules de localisation qui sont alors activés séquentiellement selon des mécanismes de retard intégrés à ces derniers, permettant une activation après un délai prédéterminé suivant la réception d'un signal de commande.

Conformément à l'invention, l'électronique d'activation et de localisation des éléments mobiles est alimentée électriquement par induction, l'antenne utilisée pour capter l'énergie étant également utilisée pour activer et synchroniser l'élément mobile, c'est-à-dire permettre une communication entre la surface de localisation et un élément mobile. L'alimentation par induction, mettant en œuvre un couplage inductif, peut utiliser des circuits de contrôle spécifiques ou des circuits standard, par exemple des circuits conformes aux standards RFID (sigle de *Radio Frequency IDentification* en terminologie anglo-saxonne) ou aux recommandations QI (développées par le consortium « *Wireless Power Consortium* ») tels que les circuits portant les références BQ500110 et BQ5101 x développés par la société Texas Instruments.

La surface de détection des positions est, par exemple, une carte de type PCB (sigle de *Printed Circuit Board* en terminologie anglo-saxonne) de réception électromagnétique, souple ou rigide. Elle peut être associée à un écran, également souple ou rigide, tactile ou non tactile, par exemple un écran de type LCD (sigle de *Liquid Crystal Display* en terminologie anglo-saxonne) ou OLED (acronyme d'*Organic Light-Emitting Diode* en terminologie anglo-saxonne) permettant de faire évoluer les éléments mobiles sur une surface visuelle interactive. La surface de détection peut également être associée à une surface aimantée permettant de faire évoluer les éléments mobiles sur un plan incliné, vertical ou inversé (tête en bas) ou soumis à des chocs, sans altérer la détection de position.

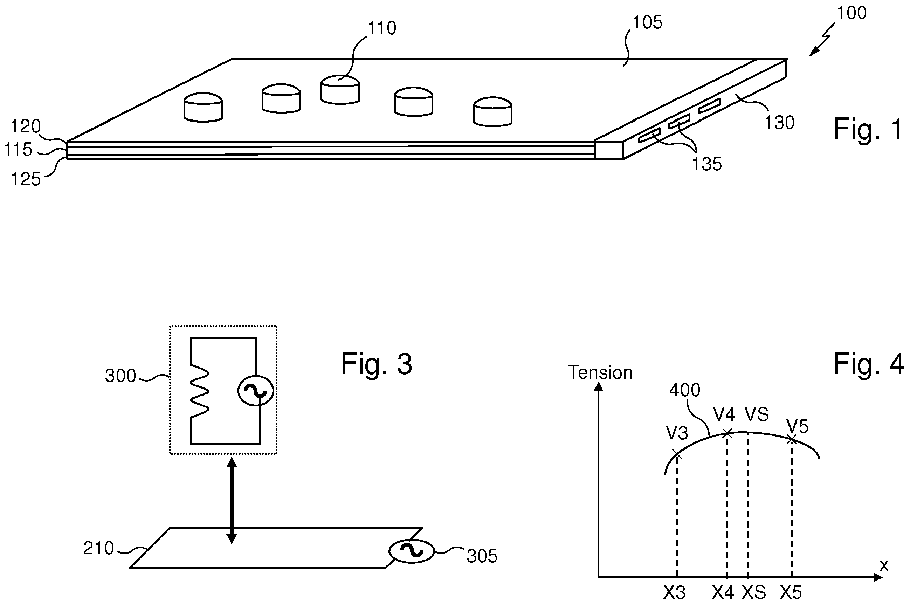

La figure 1 illustre schématiquement un exemple d'architecture 100 pouvant être utilisée pour mettre en œuvre l'invention.

L'architecture 100 comprend ici un plateau 105, par exemple un plateau de jeu, sur lequel sont disposés des éléments mobiles 110 permettant à un utilisateur d'interagir avec un système informatique associé à ce plateau en déplaçant les éléments mobiles 110. Bien que seulement cinq éléments mobiles soient ici représentés, il est possible d'en utiliser plusieurs dizaines, voire plusieurs centaines. Le plateau 105 définit la zone de détection de position et/ou d'orientation des éléments mobiles mis en œuvre.

Le plateau 105 comprend ici une surface de détection 115 couplée à un écran 120 et une surface aimantée 125 (la surface de détection 115, l'écran 120 et la surface aimantée 125 sont ici sensiblement parallèles). Il comprend également un module matériel 130 (ou système de traitement central) pour détecter la position et, si nécessaire, l'orientation des éléments mobiles 110 ainsi que pour mettre en œuvre une ou plusieurs applications avec lesquelles interagit l'utilisateur. Le module matériel 130 est notamment en charge de gérer les détections des positions et/ou orientations des éléments mobiles, c'est-à-dire identifier les modules de localisation les uns à la suite des autres, les activer pour qu'ils émettent, chacun leur tour, un champ électromagnétique et évaluer leurs positions.

Le module matériel 130 est, de préférence, inséré dans une coque avec les autres éléments du plateau 105. Alternativement, il peut s'agir d'un module déporté intégré, par exemple, à un ordinateur ou une console de jeu. Il peut être alimenté électriquement par batterie rechargeable ou via un adaptateur secteur et présente un ensemble de connexions classiques 135, par exemple une prise électrique pour adaptateur secteur, des ports USB, Ethernet, vidéo VGA (sigle de *Video Graphics Array* en terminologie anglo-saxonne) et/ou HDMI (sigle de *High Definition Multimedia In* en terminologie anglosaxonne), le cas échéant, notamment si un écran est associé à la zone de détection. Il comprend en outre, de préférence, un module de communication sans fil, par exemple un module de communication sans fil de type WIFI ou Bluetooth permettant d'interagir avec un autre système informatique et/ou d'accéder à des données via un réseau de communication.

Le module matériel 130 comprend typiquement un module de calcul et un module de pilotage de détection et de capture de position détaillé ci-après. Le module de calcul est ici pourvu d'une unité centrale de traitement (CPU, sigle de *Central Processing Unit* en terminologie anglo-saxonne), une unité de traitement graphique (GPU, sigle de Graphic Processing Unit en terminologie anglo-saxonne), des composants mémoires (RAM, sigle de *Random Access Memory* en terminologie anglosaxonne, ROM, sigle de *Read Only Memory* en terminologie anglo-saxonne et/ou de type Flash) pour stocker les programmes et les variables nécessaires à la mise en œuvre de l'invention ainsi qu'un module de traitement du son, sous forme, par exemple, d'un chipset.

Selon un mode de réalisation particulier, le module matériel 130 n'est pas intégré au plateau 105 mais est relié à lui. Il s'agit par exemple d'un dispositif de type *smartphone* connecté au plateau 105.

Le module de pilotage de détection et de capture de position active séquentiellement, de préférence par radio, chaque module de localisation dont la position doit être déterminée ou contrôle une telle activation séquentielle. Après activation, chaque module de localisation émet ici un champ électromagnétique capté par la surface de détection. Cette dernière transmet alors au module de détection et de capture de position des informations permettant de calculer la position d'un module de localisation, par exemple de type (x, y, z). Comme décrit ci-après, lorsque plusieurs modules de localisation sont associés à un même élément mobile, il est possible, à partir des positions de ces modules de localisation, de déterminer des paramètres d'orientation de cet élément mobile, par exemple sous forme d'angles. Les positions et/ou orientation de tous les éléments mobiles dont la position et/ou l'orientation doivent être déterminées sont alors transmises au module de calcul qui les utilise pour gérer l'interactivité avec l'application considérée.

Le plateau 105 et l'électronique associée sont, dans la suite de la description, appelés la surface de captation.

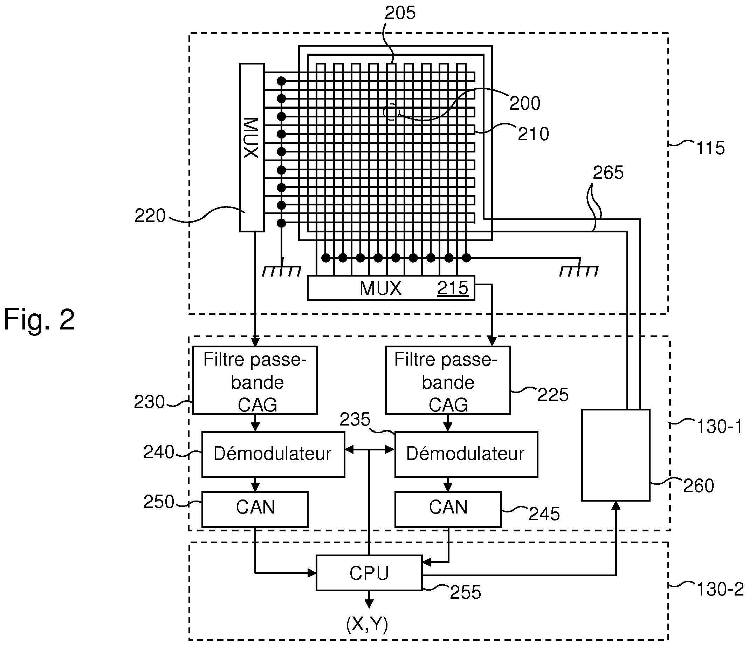

La figure 2 illustre un exemple de surface de détection et de logique associée.

La surface de détection 115 est ici constituée d'un maillage sous forme de lignes et de colonnes constituant une grille conductrice. Cette dernière comprend un ensemble de boucles conductrices suivant deux axes orthogonaux. Chaque boucle est un capteur discret permettant de mesurer l'intensité du courant ou la tension induite par un élément rayonnant, typiquement un solénoïde appartenant à un élément mobile dont la position et/ou l'orientation doivent être calculées, qui est positionné sur la surface de détection.

A titre d'illustration, il est admis ici qu'un solénoïde est placé à la position 200, c'est-à-dire à l'intersection des boucles 205 et 210 dont une extrémité est reliée à une masse et l'autre extrémité est reliée aux composants électroniques utilisés pour calculer une position. Lorsque le solénoïde situé à la position 200 est alimenté, il génère un courant inductif dans les boucles 205 et 210 qui peut être analysé et comparé au courant induit dans les autres boucles. Il est ainsi possible, par couplage inductif entre le solénoïde et la grille et par mesure du courant induit, de déterminer la position de solénoïde.

Des multiplexeurs 215 et 220 sont reliés à chaque boucle de chacun des deux axes de la grille, c'est-à-dire ici à chacune des boucles verticales et horizontales, respectivement. Les sorties des multiplexeurs 215 et 220 sont connectées aux contrôleurs automatiques de gain (CAG) 225 et 230, respectivement, du module de pilotage de détection et de capture de position, référencé ici 130-1, du module matériel 130. Les signaux de sortie des contrôleurs automatiques de gain 225 et 230 sont tout d'abord démodulés dans les démodulateurs 235 et 240, respectivement. La démodulation produit un signal continu (DC, sigle de *Direct Current* en terminologie anglo-saxonne) proportionnel à la sinusoïde originale complétée de composantes alternatives (AC, sigle d'*Alternating Current* en terminologie anglo-saxonne) multiples de la fréquence fixe émise par le solénoïde.

Selon un schéma couramment mis en œuvre, le module de calcul, référencé ici 130-2, du module matériel 130 pilote les multiplexeurs 215 et 220 afin d'activer séquentiellement les boucles, c'est-à-dire d'activer une boucle n+1 après une boucle n. Lorsque la dernière boucle est atteinte, le processeur initie un nouveau cycle et pilote l'activation de la première boucle.

Un filtre passe-bande est avantageusement mis en œuvre dans chaque contrôleur automatique de gain 225 et 230 pour supprimer les harmoniques indésirables du signal démodulé ainsi que le bruit de fond électromagnétique. Ce filtrage permet d'affiner les mesures des signaux issus des multiplexeurs 215 et 220, qui sont démodulés dans les démodulateurs 235 et 240 puis numérisés dans les convertisseurs analogique/numérique (CAN) 245 et 250, respectivement.

Les valeurs numériques obtenues sont transmises à l'unité centrale de traitement (CPU) 255 du module de calcul 130-2 pour être mémorisées. Comme illustré, l'unité centrale de traitement 255 contrôle les démodulateurs 235 et 240.

Après que les valeurs aient été mémorisées, l'unité centrale de traitement incrémente l'adresse des multiplexeurs afin de procéder à la numérisation des signaux provenant des boucles suivantes. Lorsqu'une dernière boucle est atteinte, l'unité centrale de traitement réinitialise l'adresse du multiplexeur correspondant à la valeur de la première boucle de l'axe considéré.

A la fin d'un cycle, l'unité centrale de traitement a mémorisé, pour chaque axe, autant de valeurs numériques qu'il y a de boucles adjacentes proches de la position du solénoïde. A partir de ces valeurs, l'unité centrale de traitement calcule la position du solénoïde par interpolation comme décrit ci-après.

Il est observé ici que la mise à la masse des boucles peut être assurée par des bandes de métal positionnées entre les différentes boucles afin de les protéger des interférences électromagnétiques. Une alternative consiste à disposer un plan de masse uniforme sous la grille conductrice.

Par ailleurs, le module de pilotage de détection et de capture de position 130-1 comprend ici un émetteur 260, commandé par l'unité centrale de traitement 255 du module de calcul 130-2, permettant d'activer un module de localisation d'un élément mobile. A titre d'illustration, l'unité centrale de traitement 255 transmet à l'émetteur 260 un identifiant d'un module de localisation à activer. Cet identifiant est codé puis transmis sous forme de signal radio numérique ou analogique. Chaque module de localisation recevant ce signal peut alors comparer l'identifiant reçu avec son propre identifiant et s'activer si les identifiants sont identiques. Alternativement, l'unité centrale de traitement 255 transmet à l'émetteur 260 une commande générale d'activation qui est codée puis transmise sous forme de signal radio numérique ou analogique.

L'émetteur 260 est relié à une antenne 265 permettant la transmission d'un signal de commande utilisé par les éléments mobiles comme source d'énergie et pour activer les modules de localisation. L'antenne 265 est avantageusement placée sur la surface de détection 115, par exemple autour des boucles 205 et 210. Selon un mode de réalisation particulier, les boucles 205 et 210 peuvent également être utilisées pour former l'antenne 265. A ces fins, un commutateur est utilisé pour déterminer la fonction d'émission ou de réception des boucles 205 et 210 (ces dernières sont alors, en fonction de la position du commutateur, reliées aux multiplexeurs 215 et 220 ou à l'émetteur 260).

Comme décrit ci-dessous, l'émetteur 260 peut notamment comprendre un lecteur de type RFID.

Ainsi, pour estimer la position d'un ensemble de module de localisation, il est nécessaire d'activer séquentiellement chaque module de localisation et, pour chacune de ces activations, selon le mode de réalisation décrit ici, effectuer un cycle sur chaque ensemble de boucles.

Plusieurs surfaces de détection peuvent être combinées les unes avec les autres, la superficie de la surface de détection résultante étant la somme des superficies des surfaces de détection combinées. A ces fins, une surface de détection est considérée comme maître, les autres étant considérées comme esclaves. L'activation séquentielle des éléments mobiles est gérée par la surface de détection maître qui reçoit, de préférence, les positions calculées par les modules matériels associés à chaque surface de détection esclave et les consolide en élaborant un tableau contenant les coordonnées et angles de liberté des modules de localisation.

La figure 3 illustre schématiquement le principe physique de couplage inductif entre un solénoïde et une boucle conductrice d'une surface de détection.

Conformément à l'invention, chaque élément mobile dont la position et/ou l'orientation doivent être calculées comprend au moins un solénoïde dont l'axe est, de préférence, orientée vers la surface de détection.

Le solénoïde 300 est parcouru par un courant alternatif et émet un champ électromagnétique qui se propage vers la surface de détection, notamment, dans cet exemple, vers la boucle 210. La boucle 210, recevant un champ électromagnétique issu du solénoïde 300, se couple avec le solénoïde 300. Il est alors possible de mesurer un signal alternatif aux bornes de cette boucle, référencées 305.

Le couplage entre le solénoïde 300 et la boucle 210 peut s'exprimer sous la forme de la relation suivante,

$$R = \frac{k}{D^2} E$$

où

E désigne la tension aux bornes du solénoïde 300, R désigne la tension du signal reçu aux bornes 305 de la boucle de réception 210, D est la distance entre le solénoïde 300 et la boucle de réception 210 et k est une constante liée à des facteurs intrinsèques du système comprenant le solénoïde et la boucle de réception, notamment le nombre de spires du solénoïde et la taille de la boucle.

La figure 4 illustre schématiquement un mécanisme d'interpolation permettant de calculer la position d'un solénoïde placé sur une surface de détection, selon un axe donné, à partir de mesures obtenues par un système tel que celui décrit en référence à la figure 2.

Il est supposé ici que le solénoïde se situe à proximité de boucles verticales B3, B4 et B5, positionnées selon des abscisses X3, X4 et X5, les tensions mesurées aux bornes de ces boucles étant notées V3, V4 et V5, respectivement. Le solénoïde se trouve ici a une position, en abscisse, notée XS.

Les coordonnées X3, X4 et X5 peuvent être obtenues par l'unité centrale de traitement à partir d'un identifiant de la boucle correspondante (ces valeurs sont prédéfinies selon le schéma de routage de la surface de détection et, de préférence, mémorisées dans une mémoire non volatile).

La portion de courbe 400 représentée sur la figure 4 illustre la variation de tension pour la position XS du solénoïde selon les positions des boucles couplées avec le solénoïde, extrapolée à partir des valeurs mesurées par les boucles B3, B4 et B5. Elle peut être assimilée à une fonction du second degré de type parabolique. Cette approximation locale correspond, en pratique, au phénomène de couplage électromagnétique entre un solénoïde et des boucles d'une grille conductrice.

Les relations suivantes illustrent cette propriété.

$$V3 = a(X3 - XS)^2 + b$$

$$V4 = a(X4 - XS)^2 + b$$

$$V5 = a(X5 - XS)^2 + b$$

où a et b sont des constantes, a étant une constante inférieure à zéro (a<0).

Par ailleurs, compte tenu de l'hypothèse d'une fonction du second degré, les relations entre les abscisses X3, X4 et X5 peuvent s'exprimer sous la forme suivante,

$$X4 - X3 = X5 - X4 = \Delta X$$

$$X5 - X3 = 2\Delta X$$

($\Delta X$ représentant la distance entre les abscisses X3 et X4 et entre les abscisses X4 et X5).

Ainsi, il est possible d'interpoler la position du solénoïde selon la formule suivante :

$$XS = X3 + \frac{\Delta X}{2} \frac{3V3 - 4V4 + V5}{V3 - 2V4 + V5}$$

Il est également possible, selon la même logique, de déterminer la position du solénoïde selon l'axe des ordonnées.

En outre, la distance entre le solénoïde et la boucle (c'est à dire l'altitude du solénoïde par rapport à la surface de détection) peut être définie selon la relation suivante,

$$D = \sqrt{\frac{k}{R} E}$$

La distance D est donc fonction de la valeur R représentant la tension aux bornes des boucles considérées de la surface de détection. Elle peut être extrapolée à partir des mesures réalisées. Il est noté que la précision de ce calcul de distance est notamment liée à la stabilité du signal E émis par le solénoïde dont la valeur doit être aussi constante que possible au cours du temps, ce qui nécessite une alimentation stabilisée dans le module de localisation qui ne doit pas chuter lors de la décharge de la batterie. Ceci peut être assuré par un régulateur de tension du module de localisation.

Comme indiqué précédemment, l'électronique d'activation et de localisation des éléments mobiles est alimentée électriquement par induction, l'antenne utilisée pour capter l'énergie étant également utilisée pour activer et synchroniser l'élément mobile. Selon un mode de réalisation particulier, l'alimentation des modules de localisation des éléments mobile est réalisée par un module de télé-alimentation d'un circuit de type RFID. L'utilisation d'une technologie de type RFID peut ainsi être utilisée pour alimenter des modules de localisation et, le cas échéant, comme moyens de communication pour permettre de les activer ou les synchroniser.

A ces fins, l'émetteur 260 représenté sur la figure 2 (ou plus généralement le module de pilotage de détection de position) utilise un lecteur de type lecteur RFID permettant un mode de communication et de synchronisation du module de localisation via la technologie RFID. Les communications peuvent alors être réalisées par écritures et lectures dans une mémoire non volatile d'un circuit de type RFID embarqué dans les éléments mobiles. De telles mémoires sont avantageusement accessibles par la surface de captation par des accès de type RFID ainsi que par des microcontrôleurs embarqués dans les éléments mobiles par des liaisons électriques directes. Une synchronisation peut notamment être réalisée par une modulation spécifique de l'amplitude de la porteuse RFID.

Ainsi, selon un mode de réalisation particulier, l'électronique de la surface de captation comprend un lecteur de type RFID, c'est-à-dire un système permettant d'accéder en lecture et écriture à des composants de type RFID, ou tags RFID, situés à proximité de la surface de captation. Cette électronique comprend ici au moins une bobine conductrice couvrant tout ou une partie de la surface de captation, utilisée comme antenne émettrice/réceptrice RFID.

La puissance magnétique moyenne émise par l'antenne RFID de la surface de captation est d'un niveau tel qu'elle permet de télé-alimenter par induction magnétique l'électronique des éléments mobiles situés à proximité immédiate de l'antenne RFID.

Il est observé ici que le lecteur RFID et les éléments mobiles peuvent exploiter une des nombreuses normes RFID et leurs dérivées telles que les normes ISO/IEC 15693, ISO 18000-3, ISO 18000-4, ISO 18000-7, ISO/IEC 14443, ISO/IEC 18092 (plus connue sous le nom de NFC, sigle de *Near Field Communication* en terminologie anglo-saxonne), ISO/IEC 21481 (également connue sous le nom de NFC).

L'unité centrale de traitement utilisée pour contrôler la surface de captation, par exemple l'unité centrale de traitement 255, est également utilisée ici pour contrôler le lecteur RFID. Elle peut aussi contrôler temporellement l'activation et la désactivation de la production du champ électromagnétique de télé-alimentation en phase avec un cycle de durée $T_1$ d'un signal commun de synchronisation.

Selon un mode de réalisation particulier, au moins certains des éléments mobiles contiennent une mémoire double-port non volatile. Cette dernière est ici accessible aussi bien par un lecteur de type RFID, via une communication sans fil, que par un microcontrôleur local, via une liaison filaire, par exemple une liaison conforme au standard de bus I$^2$C (sigle d'*Inter Integrated Circuit* en terminologie anglo-saxonne). Alors que cette mémoire double-port peut être utilisée pour déclencher l'activation d'un élément mobile et donc permettre sa localisation, elle peut également être utilisée à d'autres fins en offrant un moyen de communication particulier entre un élément mobile et la surface de captation.

De façon avantageuse, la mémoire double-port d'un élément mobile est accessible en lecture et en écriture par le lecteur de type RFID de la surface de captation. Elle forme un moyen de communication entre la logique de la surface de captation et un microcontrôleur embarqué dans un élément mobile. Le microcontrôleur est, de préférence, alerté de chaque requête de lecture et d'écriture reçue via le protocole de communication sans fil. Suite à la réception d'une indication de réception d'une requête, le microcontrôleur peut interroger cette mémoire pour déterminer si une telle requête lui est destinée, le type d'accès (accès en écriture ou en lecture) et l'adresse mémoire visée par la requête d'accès.

Par ailleurs, chaque élément mobile contient en mémoire non volatile un identifiant unique stocké, par exemple, sur 64 bits. Selon un mode de réalisation particulier, cet identifiant unique est celui connu sous le nom d'UID (sigle d'*Unique IDentifier* en terminologie anglo-saxonne) d'un composant électronique accessible à l'aide d'un lecteur de type RFID. Un tel identifiant peut notamment être conforme à une norme telle que les normes ISO 15693, ISO 18000-3 et ISO14443. Ainsi, un lecteur de type RFID permet au système informatique lié à la surface de détection de détecter l'arrivée de nouveaux éléments mobiles et de les identifier de façon unique par leur identifiant.

Comme décrit ci-après, la logique associée à la surface de détection peut déterminer et allouer une valeur de temporisation à chaque module de localisation détecté. Une valeur de temporisation représente ici une période de temps après laquelle un module de localisation doit émettre un signal de localisation suite à la détection d'un signal de synchronisation. La valeur de temporisation allouée à un module de localisation nouvellement détecté peut être une valeur de temporisation libre (précédemment alloué à un module de localisation qui n'est plus détecté).

A ces fins, le lecteur de type RFID peut adresser la valeur de temporisation déterminée à une mémoire double-port d'un module de localisation dans une requête en écriture. A titre d'illustration, un système informatique associé à la surface de détection peut interroger une base de données, locale ou distante, avec l'identifiant du module de localisation comme clé d'accès. Une telle base de données permet avantageusement d'obtenir la liste des caractéristiques fonctionnelles de l'élément mobile. Ainsi, par exemple, cette base de données peut être utilisée pour déterminer si l'élément mobile comprenant le module de localisation considéré dispose de moteurs, d'actuateurs, de dispositifs d'affichage, de dispositifs de production de sons, de capteurs et/ou d'interrupteurs. La liste des fonctionnalités obtenue peut notamment être utilisée pour déterminer la nature d'échanges de commandes et de données possibles entre le système informatique et l'élément mobile.

La mémoire double-port et la mémoire non volatile utilisée pour stocker un identifiant de module de localisation sont, de préférence, intégrées avec un module de télé-alimentation au sein d'un même composant. De tels composants sont disponibles. Ainsi, par exemple, la société ST Micro Electronics fabrique un composant sous la référence M24LR16E qui offre des fonctions de mémoire double-port, de récupération d'énergie et d'interfaçage sans fil.

Dans un élément mobile, un tel circuit est avantageusement relié à un microcontrôleur par un bus de type I2C.

Par ailleurs, chaque élément mobile comprend un ou plusieurs circuits oscillants ainsi qu'au moins un commutateur pour permettre l'émission de signaux de localisation. Le commutateur est avantageusement contrôlé par le microcontrôleur qui déclenche ainsi l'oscillation ou l'arrêt de l'oscillation permettant la localisation du module de localisation correspondant. Il est observé ici que l'utilisation de deux circuits oscillants permet de localiser un élément mobile et d'en déterminer l'orientation. Un seul circuit oscillant peut être utilisée si, seule, la position de l'élément mobile doit être déterminée. Alternativement, plus de deux circuits oscillants peuvent être utilisés, notamment pour améliorer l'estimation de la position et/ou l'orientation de l'élément mobile.

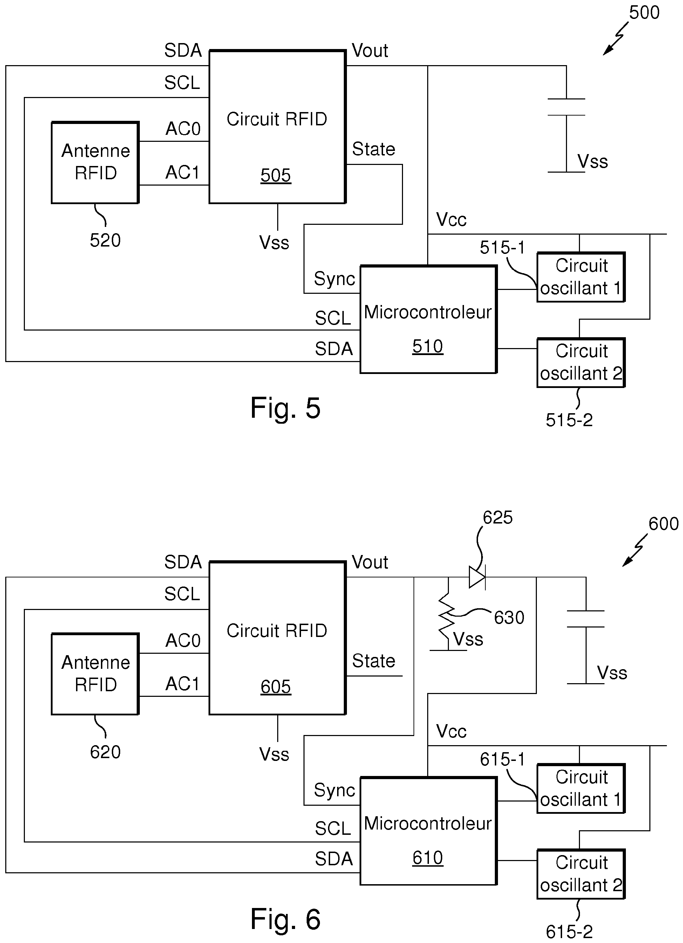

La figure 5 illustre un premier mode de réalisation d'un circuit électronique 500 d'un élément mobile. Comme illustré, le circuit 500 comprend un composant standard 505 offrant des fonctions de type RFID et intégrant une mémoire double-port, appelé composant (ou *chip* en terminologie anglo-saxonne) RFID, un microcontrôleur 510 et deux circuits oscillants 515-1 et 515-2, génériquement référencés 515. Le circuit 500 comprend également une antenne 520 de type RFID adaptée aux caractéristiques du circuit 505. L'antenne 520 est typiquement une bobine reliée au circuit 505 via deux liens appelés *ACO* et *AC1* (pour *antenna coils* en terminologie anglo-saxonne).

Selon ce mode de réalisation, deux circuits oscillants sont mis en œuvre, de façon séquentielle, pour permettre de déterminer la position et l'orientation de l'élément mobile. En d'autres termes, l'élément mobile comprend ici deux modules de localisation, ces modules de localisation ayant une partie commune (comprenant essentiellement le circuit RFID, l'antenne RFID et le microcontrôleur) et des parties distinctes (comprenant essentiellement les circuits oscillants).

Le circuit RFID 505 est ici connecté au microcontrôleur 510 par un bus de type I2C comprenant un lien série pour un signal d'horloge appelé *SCL* (pour *Serial CLock* en terminologie anglo-saxonne) et un lien série pour transmettre des données appelé *SDA* (pour *Serial Data* en terminologie anglo-saxonne). La borne d'alimentation électrique du microcontrôleur 510, notée ici *Vcc,* comme celle des circuits oscillants 515-1 et 515-2, est connectée à la borne du circuit RFID 505 délivrant une tension, notée ici *Vout.* De façon classique, la borne du circuit RFID 505 délivrant une tension est reliée à une borne de référence notée *Vss* par une capacité permettant d'absorber des pics électriques.

Par ailleurs, le signal de synchronisation du microcontrôleur, utilisé pour contrôler le déclenchement ou l'arrêt de l'oscillation (permettant la localisation de l'élément mobile), est connecté à une borne d'état du circuit RFID, notée ici *state.*

Le circuit RFID 505 étant relié à l'antenne RFID 520, il peut recevoir de l'énergie électrique en provenance d'un lecteur RFID et échanger des données avec le lecteur, selon des requêtes en lecture et en écriture, notamment pour mettre à jour sa mémoire. La sortie *Vout* du circuit RFID 505 étant reliée aux bornes d'alimentation *Vcc* du microcontrôleur 510 et des circuits oscillants 515-1 et 515-2, ces circuits peuvent être alimentés électriquement et utilisés.

Selon un exemple particulier, la borne d'état *state* du circuit RFID 505 indique, par un premier état logique, par exemple la valeur 1, que le circuit RFID reçoit et traite une requête en lecture ou en écriture ou, plus généralement, qu'il effectue une tâche prédéterminée. Dans le cas contraire, la borne d'état *state* du circuit RFID 505 est dans un second état logique, par exemple la valeur 0. Ainsi, du fait de la connexion de la borne de synchronisation du microcontrôleur 510 à la borne d'état *state* du circuit RFID 505, l'un des circuits oscillants 515-1 ou 515-2 peut être activé par le microcontrôleur 510, de façon immédiate ou différée, selon un état du circuit RFID 505. En d'autres termes, une oscillation et donc une émission électromagnétique est déclenchée (après un délai prédéterminé pouvant être nul) lorsque la borne d'état *state* du circuit RFID 505 est dans le premier état logique et arrêtée (également après un délai prédéterminé pouvant être nul) lorsque la borne d'état *state* du circuit RFID 505 est dans le second état logique. En d'autres termes, le circuit RFID 505 est en charge de contrôler le déclenchement ou l'arrêt de l'oscillation (permettant la localisation de l'élément mobile).

Il est observé ici que l'activation des circuits oscillants peut, par exemple, être effectuée de façon séquentielle selon un décalage de temps prédéterminé (l'un des circuits oscillants peut être activé après un premier retard prédéterminé suivant le signal de synchronisation et l'autre circuit oscillant peut être activé après un second retard prédéterminé suivant le signal de synchronisation).

La figure 6 illustre un deuxième mode de réalisation d'un circuit électronique 600 d'un élément mobile. Comme le circuit 500, le circuit 600 comprend un composant standard 605 offrant des fonctions de type RFID et intégrant une mémoire double-port (composant RFID), un microcontrôleur 610 et deux circuits oscillants 615-1 et 615-2, génériquement référencés 615. Le circuit 600 comprend en outre une antenne 620 de type RFID adaptée aux caractéristiques du circuit 605. A nouveau, l'antenne 620 est typiquement une bobine reliée au circuit 605 via les deux liens *ACO* et *AC1*.

Comme en ce qui concerne le circuit 500, le circuit RFID 605 est ici connecté au microcontrôleur 510 par un bus de type I2C comprenant les liens *SCL* et *SDA* et la borne d'alimentation électrique *Vcc* du microcontrôleur 610, comme celle des circuits oscillants 615-1 et 615-2, est connectée à la borne *Vout* du circuit RFID 605 délivrant une tension.

Cependant, contrairement au circuit 500, le signal de synchronisation du microcontrôleur, utilisé pour contrôler le déclenchement ou l'arrêt de l'oscillation (permettant la localisation de l'élément mobile), est ici connecté la borne *Vout* du circuit RFID 605 délivrant une tension.

Par ailleurs, la borne d'alimentation électrique *Vcc* du microcontrôleur 610, comme celle des circuits oscillants 615-1 et 615-2, est connectée à la borne *Vout du* circuit RFID 605 délivrant une tension via une diode 625. En outre, une résistance 630, par exemple une résistance de un méga ohm (1MΩ) relie la borne *Vout* du circuit RFID 605 à la borne de référence *Vss.*

A nouveau, le circuit RFID 605 est relié à l'antenne RFID 620 ce qui lui permet de recevoir de l'énergie électrique en provenance du lecteur RFID et de dialoguer en lecture/écriture avec le lecteur RFID pour mettre à jour sa mémoire. En outre, la sortie *Vout* du circuit RFID 605 étant reliée à l'alimentation *Vcc* du microcontrôleur 610 et des circuits oscillants 615-1 et 615-2, ces trois circuits sont alimentés électriquement par le circuit RFID 605.

La synchronisation du microcontrôleur 610 est ici réalisée par la sortie *Vout* du circuit RFID 605. Ainsi, lorsque le lecteur RFID fournit de l'énergie à l'élément mobile 600, la sortie *Vout du* circuit RFID 605 fournit une tension de contrôle qui se retrouve à l'entrée *Sync* du microcontrôleur 610. Cette tension de contrôle représente un premier état logique. Inversement, lorsque la sortie *Vout* passe en haute impédance lorsque le lecteur RFID ne fournit plus d'énergie à l'élément mobile 600, l'état de l'entrée *Sync* du microcontrôleur 610 passe à 0 Volts grâce à la résistance 630 de rappel à la masse et à la diode 625 qui empêche le retour de courant, représentant un second état logique. Les premier et second états logiques permettent la synchronisation du microcontrôleur 610.

Selon ce mode de réalisation, il est à la charge du logiciel s'exécutant sur le lecteur RFID de générer un signal de télé-alimentation et d'activer ce signal lorsque l'on souhaite synchroniser les microcontrôleurs des éléments mobiles.

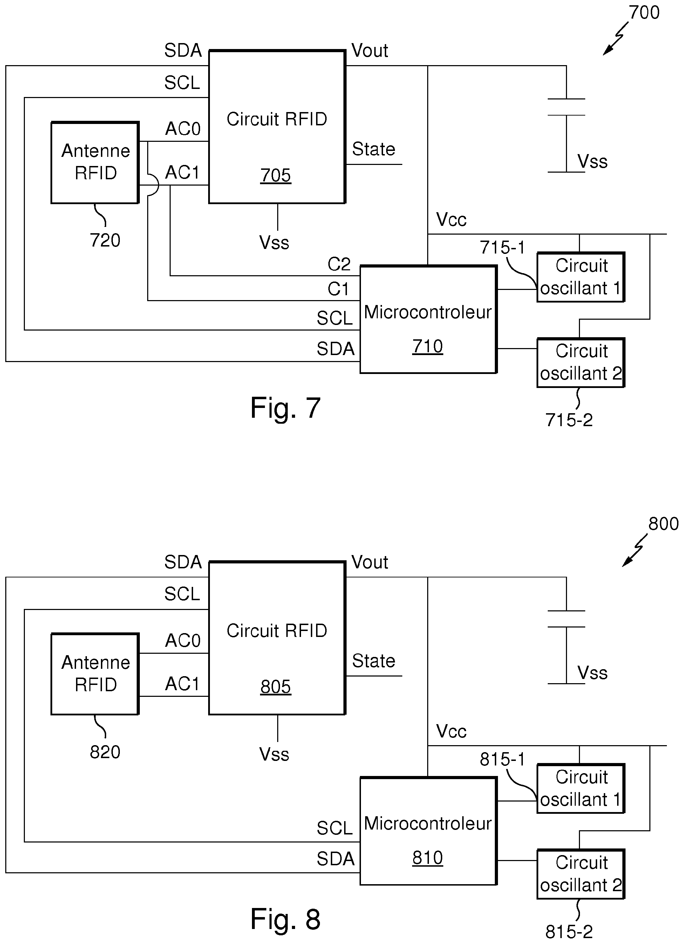

La figure 7 illustre un troisième mode de réalisation d'un circuit électronique 700 d'un élément mobile. Comme le circuit 500, le circuit 700 comprend un composant standard 705 offrant des fonctions de type RFID et intégrant une mémoire double-port (composant RFID), un microcontrôleur 710 et deux circuits oscillants 715-1 et 715-2, génériquement référencés 715. Le circuit 700 comprend en outre une antenne 720 de type RFID adaptée aux caractéristiques du circuit 705. A nouveau, l'antenne 720 est typiquement une bobine reliée au circuit 705 via les deux liens *ACO* et *AC1*.

Comme en ce qui concerne le circuit 500, le circuit RFID 705 est ici connecté au microcontrôleur 710 par un bus de type I2C comprenant les liens *SCL* et *SDA* et la borne d'alimentation électrique *Vcc* du microcontrôleur 710, comme celle des circuits oscillants 715-1 et 715-2, est connectée à la borne *Vout* du circuit RFID 705 délivrant une tension.

Cependant, contrairement au circuit 500, le signal de synchronisation du microcontrôleur 710 n'est pas utilisé. En effet, la synchronisation est effectuée ici à partir du résultat d'un comparateur analogique du microcontrôleur 710, dont les bornes sont notées *C1* et *C2.* Comme illustré, ces bornes sont connectées, respectivement, aux bornes *AC0* et *AC1* de l'antenne RFID 720. Par conséquent, le contrôle du déclenchement ou l'arrêt de l'oscillation (permettant la localisation de l'élément mobile), est ici directement lié à l'antenne RFID 720.

A nouveau, le circuit RFID 705 est relié à l'antenne RFID 720 ce qui lui permet de recevoir de l'énergie électrique en provenance du lecteur RFID et de dialoguer en lecture/écriture avec le lecteur RFID pour mettre à jour sa mémoire. En outre, la sortie *Vout* du circuit RFID 705 étant reliée à l'alimentation *Vcc* du microcontrôleur 710 et des circuits oscillants 715-1 et 715-2, ces trois circuits sont alimentés électriquement par le circuit RFID 705.

Le comparateur analogique du microcontrôleur 710, relié aux bornes *C1* et *C2,* est configuré en mode compteur (mode capture). Cela permet d'obtenir un comptage du nombre d'oscillations en sortie de l'antenne RFID 720. Ainsi, une fréquence égale à la fréquence de la porteuse émise par le lecteur RFID peut être détectée à la sortie du comparateur analogique lorsque ce dernier émet une porteuse, par exemple une fréquence égale à 15Mhz. Si, au contraire, le lecteur RFID n'émet pas de porteuse, aucune fréquence n'est détectée à la sortie du comparateur analogique (ou une fréquence distincte de celle de la porteuse). En d'autres termes, la synchronisation du microcontrôleur 705 est réalisée via la détection ou non de la porteuse du lecteur RFID. Il est donc à la charge du logiciel s'exécutant sur le lecteur RFID de générer ou non la porteuse, par exemple une porteuse ayant une fréquence égale à 15Mhz, de façon synchrone avec la fréquence d'activation des éléments mobiles.

Il est observé ici que pour arrêter quasi-instantanément une porteuse RFID, son circuit oscillant est coupé à l'instant où le courant qui le traverse est nul.

La figure 8 illustre un quatrième mode de réalisation d'un circuit électronique 800 d'un élément mobile. Comme le circuit 500, le circuit 800 comprend un composant standard 805 offrant des fonctions de type RFID et intégrant une mémoire double-port (composant RFID), un microcontrôleur 810 et deux circuits oscillants 815-1 et 815-2, génériquement référencés 815. Le circuit 800 comprend en outre une antenne 820 de type RFID adaptée aux caractéristiques du circuit 805. A nouveau, l'antenne 820 est typiquement une bobine reliée au circuit 805 via les deux liens *ACO* et *AC1.*

Comme en ce qui concerne le circuit 500, le circuit RFID 805 est ici connecté au microcontrôleur 810 par un bus de type I2C comprenant les liens *SCL* et *SDA* et la borne d'alimentation électrique *Vcc* du microcontrôleur 810, comme celle des circuits oscillants 815-1 et 815-2, est connectée à la borne *Vout* du circuit RFID 805 délivrant une tension.

Cependant, contrairement au circuit 500, le signal de synchronisation du microcontrôleur 810 n'est pas utilisé. En effet, la synchronisation est effectuée ici à partir de la valeur d'une donnée, typiquement d'un bit, mémorisée dans la mémoire double-port du circuit RFID 805. Par conséquent, le contrôle du déclenchement ou l'arrêt de l'oscillation (permettant la localisation de l'élément mobile), est ici directement lié à une valeur du circuit RFID 805.

A nouveau, le circuit RFID 805 est relié à l'antenne RFID 820 ce qui lui permet de recevoir de l'énergie électrique en provenance du lecteur RFID et de dialoguer en lecture/écriture avec le lecteur RFID pour mettre à jour sa mémoire. En outre, la sortie *Vout* du circuit RFID 805 étant reliée à l'alimentation *Vcc* du microcontrôleur 810 et des circuits oscillants 815-1 et 815-2, ces trois circuits sont alimentés électriquement par le circuit RFID 805.

Comme indiqué précédemment, la synchronisation du microcontrôleur 810 se fait via la lecture, ici sur le bus I2C, d'un bit de synchronisation dont le changement d'état permet d'activer la synchronisation. Un tel bit de synchronisation a avantageusement une adresse prédéterminée.

Il est à la charge du logiciel s'exécutant sur le lecteur RFID de générer le changement d'état du bit de synchronisation dans la mémoire du circuit RFID 805.

Chaque élément mobile comprend ici au moins un solénoïde associé à un condensateur, en parallèle, pour former au moins un circuit oscillant en charge d'émettre un signal de localisation. Ce circuit oscillant est ici stimulé par un microcontrôleur embarqué dans l'élément mobile.

Selon un mode de réalisation particulier, le microcontrôleur situé dans l'élément mobile stimule un circuit oscillant par une de ses sorties configurée pour générer un signal cyclique modulé en largeur d'impulsion et à une fréquence proche de la fréquence propre du circuit oscillant. Le contrôle du rapport cyclique a pour effet de moduler la puissance émise par le module de localisation.

Il est observé ici que les microcontrôleurs récents possèdent des circuits permettant de générer des signaux modulés en largeur d'impulsion. L'utilisation de cette fonctionnalité matérielle permet au microcontrôleur d'exécuter librement des instructions de code logiciel pendant la génération du signal. Ainsi, le microcontrôleur peut implémenter d'autres fonctions et réaliser des calculs sans perturber le cadencement du signal modulé en largeur d'impulsion.

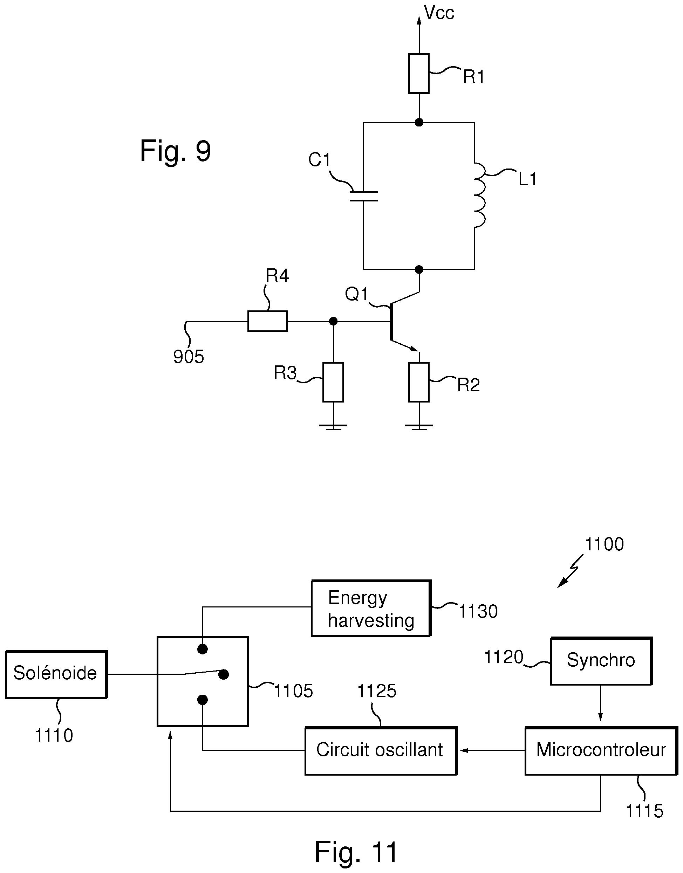

La figure 9 illustre un exemple de circuit oscillant pour élément mobile, contrôlé par un microcontrôleur.

Le circuit oscillant 900 comprend une borne d'entrée 905 reliée à un microcontrôleur pour recevoir de ce dernier un signal modulé en largeur d'impulsion (signal dit PWM, sigle de *Pulse Width Modulation* en terminologie anglo-saxonne). Cette borne est reliée, via une résistance *R4*, par exemple une résistance de 20KΩ, à la borne de commande d'un transistor *Q1* utilisé en mode commutation. L'entrée du transistor *Q1* est reliée à un circuit inductif LC comprenant une inductance *L1* et une capacité *C1* montées en parallèle. L'autre branche de ce circuit inductif est reliée à une résistance *R1* reliée à une source de tension, par exemple une source de tension régulée de 3,3V. La valeur de la résistance *R1* est ici égale à 100Ω. La valeur de l'inductance *L1* est par exemple de 220 μH tandis que la valeur de la capacité *C1* est par exemple de 3,2nF. La sortie du transistor *Q1* est reliée à une résistance *R2* qui est par ailleurs reliée à la masse. La valeur de la résistance *R2* est par exemple égale à 100Ω. Une résistance de rappel *R3* dont la valeur est ici égale à 1MΩ relie la borne de commande du transistor *Q1* à la masse.

Les phases de démarrage et d'arrêt des oscillations sont des périodes de temps où le signal de localisation reçu par une surface de détection n'est en général pas exploitable car il n'est généralement pas assez puissant et d'une amplitude non constante et non contrôlée. Dans une utilisation où de très nombreux éléments mobiles doivent émettre à tour de rôle, ces temps de démarrage et d'arrêt deviennent non négligeables par rapport au temps d'émission utile pendant lequel l'électronique de la surface de détection peut effectivement localiser les éléments mobiles.

Par conséquent, il est important que les phases de démarrage et d'arrêt soient courtes. A ces fins, au démarrage, lors des premières oscillations, le rapport cyclique du signal numérique généré par le microcontrôleur de l'élément mobile est modifié pour injecter plus de puissance et atteindre très vite, de préférence en seulement un ou deux cycles, l'amplitude nominale.

De même, durant la phase d'arrêt, plutôt que d'arrêter simplement de stimuler le circuit oscillant et le laisser se relaxer à un rythme exponentiel (circuit équivalent RLC), pendant un ou deux cycles, le microcontrôleur injecte à chaque cycle une impulsion en opposition de phase avec l'oscillation naturelle du circuit.

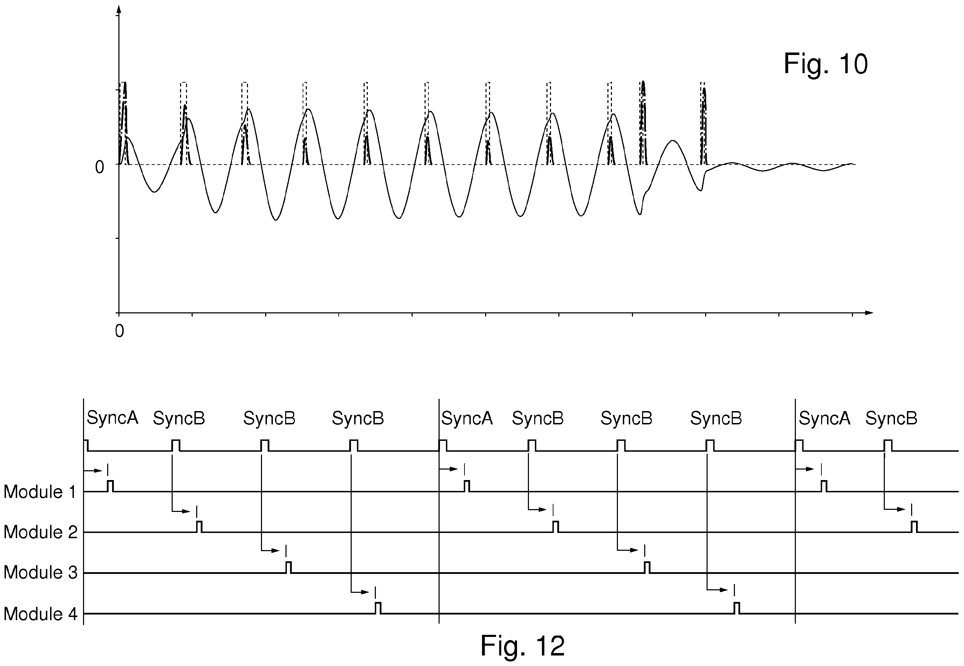

La figure 10 représente une simulation montrant le contrôle actif des phases de démarrage et d'arrêt de l'oscillation d'une inductance. Le temps est représenté en abscisse. Le signal en trait continu représente la tension aux bornes du circuit inductif LC, le signal en traits pointillés représente les impulsions de commande en tension issu du microcontrôleur et le signal en traits pointillés gras de longueurs variables représente le courant d'alimentation consommé par le circuit oscillant.

Il est observé ici que la modulation de la puissance émise par des circuits oscillants des modules de localisation permet d'encoder un train binaire correspondant à des données à transférer vers un système informatique lié à la surface de localisation. Connaissant l'amplitude *A1* correspondant à l'état bas et l'amplitude *A2* correspondant à l'état haut d'un signal de localisation, il est possible d'utiliser une modulation de type NRZ (sigle de *Non Return to Zero* en terminologie anglo-saxonne) qui permet à la surface de détection de discriminer les variations d'amplitude associées à un transfert de données, de celles qui sont dues à toutes les causes qui peuvent produire une variation relativement lente de la puissance reçue (comprenant notamment la variation de la distance entre l'élément mobile et la surface de détection ainsi que la variation de la tension d'alimentation de l'élément mobile).

Il est également observé que lorsqu'un élément mobile acquiert de l'énergie (fonction appelée *energy harvesting* en terminologie anglo-saxonne) sur une porteuse RFID, les courants induits dans la bobine réceptrice de l'élément mobile produisent une contre réaction négative qui réduit localement la puissance du champ magnétique. Dans les phases où un élément mobile n'a pas besoin de plus d'énergie que celle qui a déjà été accumulée, il peut, de préférence, ouvrir le circuit de sa bobine réceptrice pour supprimer ainsi la perturbation induite sur le champ magnétique local. Une telle fonction peut notamment être réalisée à l'aide d'un commutateur analogique de type MOSFET (acronyme de *Metal Oxide Semiconductor Field Effect Transistor* en terminologie anglo-saxonne) à faible résistance et courant de fuite.

Par ailleurs, quelque-soit la solution matérielle envisagée pour les communications, les transferts de données vers et depuis les éléments mobiles peuvent être chiffrés selon un système cryptographique, par exemple un système cryptographique à base de clés publique et privée de type RSA (sigle de *Rivest Shamir Adleman*) ou AES (sigle d'*Advanced Encryption Standard* en terminologie anglo-saxonne).

Il est observé ici que selon les modes de réalisation décrit précédemment, l'activation de circuits oscillants permettant leur localisation est effectuée par les microcontrôleurs des éléments mobiles, ces derniers recevant des informations de synchronisation à partir d'un signal de type RFID reçu de l'élément mobile considéré. Cependant, ces informations dérivent typiquement d'un signal basse fréquence, par exemple un signal ayant une fréquence de 1Hz (une telle fréquence peut être obtenue lorsque la synchronisation est effectuée par rupture de la porteuse de télé-alimentation car il est souhaitable de limiter la fréquence de coupure).

Cependant, les microcontrôleurs utilisés doivent générer des impulsions afin de déclencher chaque solénoïde dans un cycle de rafraîchissement, c'est-à-dire un cycle de détermination de la position et, le cas échéant, l'orientation de chaque élément mobile d'un ensemble d'éléments mobiles, compatible avec une utilisation temps réel du système. Une telle fréquence de rafraîchissement est, par exemple, de 60Hz. A cette fréquence, chaque cycle de rafraîchissement à une durée de 16ms. Des impulsions doivent donc être fournies par chaque microcontrôleur toutes les 16 ms, avec un décalage temporel pour le début de chaque impulsion, pour chaque circuit oscillant, qui dépend d'une fenêtre temporelle (ou *timeslot* en terminologie anglo-saxonne) attribuée à ce dernier. L'attribution d'une telle fenêtre temporelle peut être effectuée conformément à l'enseignement de la demande de brevet WO 2012/028827.

Chaque microcontrôleur ne recevant qu'une information basse fréquence, il doit avoir une base de temps qui lui est propre pour générer les impulsions toutes les 16ms et recaler cette base de temps dès la disponibilité du signal de synchronisation externe. Cela permet d'éviter une dérive trop importante de l'horloge interne du microcontrôleur.

Dans la situation où les horloges internes des éléments mobiles et de l'électronique de la surface de localisation n'ont pas exactement le même rythme, les éléments mobiles compensent leur horloge interne sur la base d'une comparaison de la durée mesurée entre deux informations consécutives de synchronisation avec une durée théorique et prédéterminée. Il est observé que plus cette durée est longue, plus la correction est précise. Ainsi, si la mesure de la durée est effectuée avec une précision P et sur une durée théorique et prédéterminée $D$, la précision de la compensation d'horloge du microcontrôleur est égale à $P/D$. A titre d'illustration, si la précision est $P$ = 10µs et la durée est D = 1s, la précision obtenue est égale à $1e^{-5}$, soit potentiellement mille fois mieux que les $+/-2e^{-2}$ typiques d'une horloge interne non calibrée d'un microcontrôleur.

Les modules de localisation peuvent également recevoir de l'énergie à partir de lignes et colonnes rayonnantes d'une surface de localisation, en particulier des lignes et colonnes utilisées pour recevoir des signaux de localisation provenant de modules de localisation.

La figure 11 illustre un exemple de module de localisation permettant de recevoir de l'énergie de lignes et colonnes d'une surface de localisation, utilisées pour recevoir des signaux de localisation provenant de modules de localisation. Comme illustré, le module de localisation 1100 est ici pourvu d'un commutateur 1105 permettant le rayonnement d'un solénoïde 1110 selon une configuration classique utilisé pour sa localisation. Dans cette configuration, un microcontrôleur 1115 génère un signal, par exemple périodique ayant une fréquence de 200KHz, en fonction d'une commande de synchronisation issue d'un module de synchronisation 1120. Le signal généré est amplifié dans un circuit oscillant 1125 et transmis vers le solénoïde 1110.

Le commutateur 1105 permet également d'utiliser le solénoïde 1110 comme récepteur d'énergie par couplage inductif, le solénoïde 1110 étant, à ces fins, relié à un circuit d'*energy harvesting* 1130. A titre d'illustration, un tel circuit d'*energy harvesting* peut comprendre des diodes de redressement et une capacité permettant de stocker du courant pouvant être restitué ultérieurement.

Le commutateur 1105 permet enfin de laisser ouverte l'une des deux bornes du solénoïde 1110 de telle sorte qu'aucun courant ne puisse le traverser. Ce mode est notamment utile dans des phases durant lesquelles un élément mobile n'a pas besoin de plus d'énergie que celle qui a déjà été accumulée, il supprime ainsi sa perturbation induite sur le champ magnétique local. Cette énergie non captée devient alors disponible pour les éléments mobiles proches.

L'information de synchronisation est fournie par le module de synchronisation 1120 qui peut être, par exemple, un récepteur radio FM, notamment un récepteur FM capable de recevoir des signaux ayant une fréquence autour de 433MHz. Une information de synchronisation doit être utilisée pour indiquer au microcontrôleur s'il doit être en mode de localisation, d'acquisition d'énergie ou « ouvert ». Cette information peut être transmise sous la forme d'un train binaire par un microcontrôleur de la surface de localisation.

Il est observé ici que le protocole RFID utilise une porteuse HF (sigle de Haute Fréquence) qui si elle est émise en permanence, peut perturber le processus de localisation des éléments mobiles par la surface de localisation. Afin de supprimer ou à tout le moins réduire cet effet, la porteuse RFID est, selon un mode de réalisation particulier, émise en permanence avec une fréquence d'environ 13,56 MHz. Par ailleurs, la mise en œuvre d'un ou plusieurs filtres passe-bas en entrée de la surface de détection permet de rejeter cette fréquence tout en laissant passer le signal provenant des modules de localisation.

Selon un autre mode de réalisation, la porteuse RFID n'est émise que durant un ou plusieurs intervalles de temps de chaque cycle de rafraîchissement, les modules de localisation des éléments mobiles étant activés en dehors de ces intervalles de temps, sans risque de perturbation.

Par ailleurs, afin de réduire sa consommation électrique, un élément mobile peut mettre en veille son électronique durant l'intervalle de temps de chaque cycle de rafraîchissement (fixe et répétitif), durant lequel il ne doit pas activer son module de localisation ni transmettre de données.

Selon un mode de réalisation particulier, certains éléments mobiles n'activent pas leurs modules de localisation à chaque cycle de rafraîchissement, noté ici $T_1$, mais selon un multiple, noté $N$, de ce cycle, c'est-à-dire selon un cycle $NxT_1$. Un tel mode de réalisation est notamment adapté à des éléments mobiles destinés à être rarement déplacés sur la surface de localisation. Cela a également pour effet de permettre la réduction de la consommation électrique de ces éléments mobiles qui peuvent, en régime synchronisé, mettre en veille leurs composants consommateurs, y compris ceux en charge de la réception d'un signal de synchronisation, durant un intervalle de temps au moins égal à $(N-1)xT_1$. Le facteur de réduction de la consommation électrique est alors de l'ordre N.

Toujours selon un mode de réalisation particulier, le signal commun de synchronisation peut comprendre au moins deux signaux distincts notés ici *SyncA* et *SyncB,* différentiables par les éléments mobiles. A titre d'illustration, le signal *SyncA* est émis selon un cycle de N cycles de durée $T_1$ alors que le signal *SyncB* est émis à chaque cycle de durée $T_1$. Ainsi, lorsqu'un index de retard égal à *M*, avec *0≤M<N,* est attribué à un élément mobile, celui-ci est activé tous les $N$ cycles, à un instant $MxT_1$ suivant la réception du signal *SyncA*.

Il est observé ici que si, en théorie, un élément mobile n'a besoin que du signal *SyncA,* en pratique, l'utilisation du signal *SyncB* est préférable, lorsque la valeur de $M$ est non nulle, pour augmenter la précision de l'ordonnancement d'activation des éléments mobiles.

Ainsi, par exemple, en référence à la figure 12, concernant le module 3 (activé lorsque $M$ = 2) et un *timeslot* égal à trois, le module attend, lors de l'initialisation, la réception du signal *SyncA* puis se met en état de veille durant un temps inférieur à $2xT_1$. En fin de veille, il attend le signal *SyncB* puis attend une durée égale *trois* timeslots pour activer une émission électromagnétique (c'est-à-dire, typiquement, pour exciter un solénoïde). Il se remet alors en état de veille jusqu'à un instant précédent la réception du signal *SyncB* du cycle $NxT_1$ suivant. A partir de cet instant, il n'est, en théorie, plus nécessaire, pour l'élément mobile, d'attendre le signal *SyncA.* Cependant, pour écarter de potentiels problèmes de désynchronisation, l'élément mobile peut avantageusement vérifier de temps en temps, par exemple une fois par seconde, que la réception du signal *SyncA* se situe bien à l'instant prévu dans son cycle $NxT_1$. Si une dérive est observée, l'élément mobile refait, de préférence, le cycle de synchronisation complet à partir de la réception du signal *SyncA.*

Les signaux de synchronisation sont, par exemple, transmis par modulation en fréquence d'une porteuse radio. A titre d'illustration, les signaux *SyncA* et *SyncB* sont des signaux à impulsions carrées de durée différente.

La figure 12 représente un exemple de chronogramme de synchronisation lorsque deux signaux de synchronisation *SynA* et *SyncB* sont utilisés. Le signal *SyncA* est ici émis selon un cycle de $N$ cycles de durée $T_1$ alors que le signal *SyncB* est émis à chaque cycle de durée $T_1$, avec $T_1$ = 25ms et $N$ = 4. Le signal *SyncA* est ici à impulsions carrées de durée d'une milliseconde tandis que le signal *SyncB* est à impulsions carrées de durée d'une milliseconde et demi.

Le chronogramme représenté vise l'activation de quatre éléments mobiles comprenant chacun un module de localisation. Ces éléments mobiles partagent ici le même *timeslot* et ont des index $M$ de retard égaux à 0, 1, 2 et 3, respectivement.

Toujours selon un mode de réalisation particulier, la surface de localisation ainsi que chacun des éléments mobiles comprennent un système électronique capable d'implémenter la fonctionnalité connue sous le nom de *MultiCeiver* du protocole connu sous le nom d'*Enhanced Shockburst* (*MultiCeiver* et *Enhanced Shockburst* sont des marques), cette fonctionnalité permettant de réaliser le signal commun de synchronisation.

Cette fonctionnalité peut notamment être mise en œuvre à l'aide composant électronique ayant la référence nRF24LE1 de Nordic Semiconductor. Conformément à ce mode de réalisation, le circuit nRF24LE1 de la surface de localisation émet les signaux de synchronisation *SyncA* et *SyncB* de la façon suivante :

- chacun des éléments mobiles réserve une adresse logique ALSYNC de valeur prédéterminée et identique pour tous les éléments mobiles, cette adresse est ici réservée dans une interface de communication appelée « *data pipe 0* » ;

- le circuit nRF24LE1 de la surface de localisation transmet vers l'adresse ALSYNC, à chaque cycle de rafraîchissement $T_1$, un paquet de données comprenant au moins un octet. Pour le signal de synchronisation *SyncA,* le premier octet du paquet de données a une première valeur prédéterminée et, pour le signal de synchronisation *SyncB,* le premier octet du paquet de données a une seconde valeur, distincte de la première valeur utilisée pour le signal de synchronisation *SyncA* ;

- du coté des éléments mobiles, la réception de chacun de ces signaux produit, avec un délai constant, une interruption matérielle qui indique l'instant précis de la synchronisation. En outre, en lisant le premier octet du paquet de données reçu, le logiciel du circuit nRF24LE1 détermine s'il s'agit du signal de synchronisation *SyncA* ou *SyncB.*

A titre d'illustration, les modules de localisation peuvent être intégrés dans des dispositifs mobiles tels que des robots ou des jouets, par exemple des voitures ou des hélicoptères. L'acquisition en temps réel de la position et l'orientation d'un dispositif mobile ainsi que le contrôle d'actuateurs de ce dernier permettent de le diriger automatiquement, par exemple pour lui faire suivre des trajectoires particulières pouvant notamment être définies par un logiciel applicatif. A ces fins, le logiciel applicatif utilisé et qui s'exécute sur un calculateur, par exemple un ordinateur de type PC (sigle de *Personal Computer* en terminologie anglo-saxonne), un smartphone ou une tablette, peut transmettre des commandes de contrôle via une interface de type SDK (sigle de *Software Development Kit* en terminologie anglo-saxonne). De telles commandes de contrôle sont, par exemple, un sens et une vitesse de rotation de moteurs. Elles sont codées et transmises au lecteur de type RFID utilisé qui peut alors les transmettre sous forme d'un signal de type RFID, dans une instruction d'écriture, à un circuit de type RFID d'un module de localisation.

Un microcontrôleur de ce dernier peut alors les lire dans la mémoire du circuit de type RFID en utilisant, par exemple, un bus I2C. Ces commandes ou des données représentatives de ces commandes sont, de préférence, mémorisées à des emplacements prédéterminés du circuit de type RFID. Le microcontrôleur du module de localisation est ici muni de sorties, par exemple des sorties de type PWM, permettant de contrôler des actuateurs tels que des moteurs à partir des informations mémorisées dans le circuit de type RFID.

Naturellement, pour satisfaire des besoins spécifiques, une personne compétente dans le domaine de l'invention pourra appliquer des modifications dans la description précédente. En particulier, si l'invention est, aux fins d'illustration, décrite, en particulier, en référence au protocole RFID, l'invention n'est pas limitée à la mise en œuvre de celui-ci.

**Revendications**

1. Dispositif pour l'aide à la localisation en temps réel, par rayonnement électromagnétique, d'un élément mobile autoalimenté, ce dispositif étant **caractérisé en ce qu'**il comprend les moyens suivants,

    - moyens de réception (505, 520, 605, 620, 705, 720, 805, 820) d'un signal radioélectrique comprenant au moins une information de synchronisation, lesdits moyens étant configurés pour recevoir de l'énergie d'un signal radioélectrique reçu ;
    - moyens d'émission (515, 615, 715, 815) d'un signal électromagnétique, ledit signal électromagnétique étant émis en réponse à un signal d'activation ;
    - moyens de contrôle (510, 610, 710, 810) connectés auxdits moyens de réception et auxdits moyens d'émission d'un signal électromagnétique, lesdits moyens de contrôle étant électriquement alimentés par lesdits moyens de réception d'un signal radioélectrique et étant configurés pour générer un signal d'activation en réponse à une information de synchronisation ;

    dans lequel lesdits moyens de réception d'un signal radioélectrique comprennent une mémoire double-port, ladite mémoire double-port étant configurée pour être accessible en lecture et/ou en écriture par un signal radioélectrique et par lesdits moyens de contrôle ; et
    dans lequel lesdits moyens de contrôle comprennent des moyens d'accès à une valeur mémorisée dans ladite mémoire double-port, une information de synchronisation étant identifiée en fonction d'une valeur mémorisée dans ladite mémoire double-port.

2. Dispositif selon la revendication 1 selon lequel lesdits moyens de réception d'un signal radioélectrique comprennent des moyens d'identification d'une information de synchronisation à partir d'un signal radioélectrique reçu et des moyens de transmission d'une information de synchronisation identifiée auxdits moyens de contrôle.

3. Dispositif selon la revendication 1 selon lequel lesdits moyens de contrôle comprennent des moyens de détection d'un changement d'état d'une source d'énergie électrique desdits moyens de réception d'un signal radioélectrique, une information de synchronisation étant identifiée en réponse à un changement d'état d'une source d'énergie électrique desdits moyens de réception d'un signal radioélectrique.

4. Dispositif selon la revendication 1 selon lequel lesdits moyens de contrôle comprennent des moyens de détection d'un changement d'état d'une porteuse d'un signal radioélectrique reçu, une information de synchronisation étant identifiée en réponse à un changement d'état d'une porteuse d'un signal radioélectrique reçu.

5. Dispositif selon l'une quelconque des revendications précédentes selon lequel lesdits moyens d'émission d'un signal électromagnétique comprennent un solénoïde (L1) et un commutateur (Q1) contrôlant l'activation dudit solénoïde.

6. Dispositif selon l'une quelconque des revendications précédentes comprenant en outre des moyens de détermination d'un instant de génération un signal d'activation, ledit instant étant déterminé selon l'instant de réception d'une information de synchronisation et une information de retard.

7. Dispositif selon l'une quelconque des revendications précédentes selon lequel lesdits moyens de réception d'un signal radioélectrique sont conformes à un standard de type RFID.

8. Dispositif selon l'une quelconque des revendications précédentes selon lequel lesdits moyens de contrôle comprennent des moyens de contrôle d'au moins un actuateur dudit élément mobile.

9. Dispositif selon l'une quelconque des revendications précédentes comprenant en outre des seconds moyens d'émission d'un signal électromagnétique, lesdits moyens d'émission d'un signal électromagnétique étant appelés premiers moyens d'émission d'un signal électromagnétique, lesdits premiers et seconds moyens d'émission d'un signal électromagnétique étant configurés pour émettre un signal électromagnétique les uns après les autres pour permettre la détermination de l'orientation dudit élément mobile.

**Patentansprüche**

1. Vorrichtung zur Unterstützung der Echtzeit-Ortung eines selbstgespeisten mobilen Elements durch elektromagnetische Strahlung,
wobei diese Vorrichtung **dadurch gekennzeichnet ist, dass** sie die folgenden Mittel enthält:

- Empfangsmittel (505, 520, 605, 620, 705, 720, 805, 820) zum Empfangen eines Funksignals, das zumindest eine Synchronisationsinformation umfasst, wobei die Mittel dazu ausgelegt sind, Energie von einem empfangenen Funksignal zu empfangen;
- Ausgabemittel (515, 615, 715, 815) zum Ausgeben eines elektromagnetischen Signals, wobei das elektromagnetische Signal als Reaktion auf ein Aktivierungssignal ausgegeben wird;
- Steuermittel (510, 610, 710, 810), die mit den Empfangsmitteln und den Mitteln zum Ausgeben eines elektromagnetischen Signals verbunden sind, wobei die Steuermittel über die Mittel zum Empfangen eines Funksignals elektrisch gespeist werden und dazu ausgelegt sind, als Reaktion auf eine Synchronisationsinformation ein Aktivierungssignal zu erzeugen;

wobei die Mittel zum Empfangen eines Funksignals einen Dual-Port-Speicher enthalten, wobei der Dual-Port-Speicher so ausgelegt ist, dass er über ein Funksignal und über die Steuermittel zum Lesen und/oder Schreiben zugänglich ist; und
wobei die Steuermittel Mittel zum Zugreifen auf einen in dem Dual-Port-Speicher gespeicherten Wert aufweisen, wobei eine Synchronisationsinformation in Abhängigkeit von einem in dem Dual-Port-Speicher gespeicherten Wert identifiziert wird.

2. Vorrichtung nach Anspruch 1, wobei die Mittel zum Empfangen eines Funksignals Mittel zum Identifizieren einer Synchronisationsinformation aus einem empfangenen Funksignal und Mittel zum Übertragen einer identifizierten Synchronisationsinformation an die Steuermittel enthalten.

3. Vorrichtung nach Anspruch 1, wobei die Steuermittel Mittel zum Erfassen einer Zustandsänderung einer elektrischen Energiequelle der Mittel zum Empfangen eines Funksignals aufweisen, wobei eine Synchronisationsinformation als Reaktion auf eine Zustandsänderung einer elektrischen Energiequelle der Mittel zum Empfangen eines Funksignals identifiziert wird.

4. Vorrichtung nach Anspruch 1, wobei die Steuermittel Mittel zum Erfassen einer Zustandsänderung eines Trägers eines empfangenen Funksignals enthalten, wobei eine Synchronisationsinformation als Reaktion auf eine Zustandsänderung eines Trägers eines empfangenen Funksignals identifiziert wird.

5. Vorrichtung nach einem der vorangehenden Ansprüche, wobei die Mittel zum Ausgeben eines elektromagnetischen Signals ein Solenoid (L1) und einen Schalter (Q1) enthalten, der die Aktivierung des Solenoids steuert.

6. Vorrichtung nach einem der vorangehenden Ansprüche, ferner enthaltend Mittel zum Bestimmen eines Zeitpunkts der Erzeugung eines Aktivierungssignals, wobei dieser Zeitpunkt gemäß dem Zeitpunkt des Empfangens einer Synchronisationsinformation und einer Verzögerungsinformation bestimmt wird.

7. Vorrichtung nach einem der vorangehenden Ansprüche, wobei die Mittel zum Empfangen eines Funksignals mit einem RFID-Standard konform sind.

8. Vorrichtung nach einem der vorangehenden Ansprüche, wobei die Steuermittel Mittel zum Steuern mindestens eines Stellgliedes des mobilen Elements enthalten.

9. Vorrichtung nach einem der vorangehenden Ansprüche, ferner enthaltend zweite Mittel zum Ausgeben eines elektromagnetischen Signals, wobei die Mittel zum Ausgeben eines elektromagnetischen Signals als erste Mittel zum Ausgeben eines elektromagnetischen Signals bezeichnet werden, wobei die ersten und die zweiten Mittel zum Ausgeben eines elektromagnetischen Signals dazu ausgelegt sind, nacheinander ein elektromagnetisches Signal auszugeben, um die Ausrichtung des mobilen Elements bestimmen zu können.

## Claims

1. Device for aiding the location in real time, by electromagnetic radiation, of a self-powered mobile element, this device being **characterized in that** it comprises the following means,

- reception means (505, 520, 605, 620, 705, 720, 805, 820) for receiving a radio signal comprising at least one synchronization data item, said means being configured to receive power from a received radio signal;
- transmission means (515, 615, 715, 815) for transmitting an electromagnetic signal, said electromagnetic signal being transmitted in response to an activation signal;
- controlling means (510, 610, 710, 810) connected to said reception means and to said transmission means for transmitting an electromagnetic signal, said controlling means being electrically powered by said reception means for receiving a radio signal and being configured to generate an activation signal in response to a synchronization data item,

wherein said reception means for receiving a radio signal comprise a dual-port memory, said dual-port memory being configured to be readable and/or writable by a radio signal and by said controlling means; and

wherein said controlling means comprise access means for accessing a value stored in said dual-port memory, a synchronization data item being identified as a function of a value stored in said dual-port memory.

2. Device according to claim 1 wherein said reception means for receiving a radio signal comprise identification means for identifying a synchronization data item based on a received radio signal and transmission means for transmitting an identified synchronization data item to said controlling means.

3. Device according to claim 1 wherein said controlling means comprise detection means for detecting a change of state of an electrical power source of said reception means for receiving a radio signal, a synchronization data item being identified in response to a change of state of an electrical power source of said reception means for receiving a radio signal.

4. Device according to claim 1 wherein said controlling means comprise detection means for detecting a change of state of a carrier of a received radio signal, a synchronization data item being identified in response to a change of state of a carrier of a received radio signal.

5. Device according to any one of the preceding claims wherein said transmission means for transmitting an electromagnetic signal comprise a solenoid (L1) and a switch (Q1) controlling the activation of said solenoid.

6. Device according to any one of the preceding claims further comprising determination means for determining a moment of generation of an activation signal, said moment being determined according to the moment of reception of a synchronization data item and a delay data item.

7. Device according to any one of the preceding claims wherein said reception means for receiving a radio signal comply with an RFID-type standard.

8. Device according to any one of the preceding claims wherein said controlling means comprise means for controlling at least one actuator of said mobile element.

9. Device according to any one of the preceding claims further comprising second transmission means for transmitting an electromagnetic signal, said transmission means for transmitting an electromagnetic signal being called first transmission means for transmitting an electromagnetic signal, said first and second transmission means for transmitting an electromagnetic signal being configured to transmit an electromagnetic signal one after another in order to allow the determination of the orientation of said mobile element.

Fig. 1

Fig. 3

Fig. 4

EP 2 859 507 B1

Fig. 2

Fig. 5

Fig. 6

700

SDA | Vout
SCL
AC0 | Circuit RFID
AC1 | **705**
Antenne RFID
720
Vss

Vss

Vcc
715-1
Circuit oscillant 1
C2
C1
SCL | Microcontroleur
SDA | **710**
Circuit oscillant 2
715-2

## Fig. 7

800

SDA | Vout
SCL
AC0 | Circuit RFID
AC1 | **805**
Antenne RFID
820
Vss

Vss

Vcc
815-1
Circuit oscillant 1
SCL | Microcontroleur
SDA | **810**
Circuit oscillant 2
815-2

## Fig. 8

Fig. 9

Fig. 11

Fig. 10

Fig. 12

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2012028827 A